# EUROPÄISCHE PATENTSCHRIFT

(11) **EP 1 048 141 B1**
(45) Veröffentlichungstag und Bekanntmachung des Hinweises auf die Patenterteilung: **10.08.2005**
(21) Anmeldenummer: 98965790.3
(22) Anmeldetag: 09.12.1998
(51) Int. Cl.: H04L 9/08, H04L 9/32

(54) **VERFAHREN ZUR GENERIERUNG ASYMMETRISCHER KRYPTOSCHLÜSSEL BEIM ANWENDER**
METHOD FOR GENERATING ASYMMETRICAL CRYPTOGRAPHIC KEYS BY THE USER
PROCEDE DE GENERATION DE CLES DE CHIFFREMENT ASYMETRIQUES PAR L'UTILISATEUR

(30) Priorität: 12.01.1998 DE 19801241
(43) Veröffentlichungstag der Anmeldung: 02.11.2000
(73) Patentinhaber: Deutsche Telekom AG, 53113 Bonn (DE)
(72) Erfinder: MERTES, Paul, D-57258 Freudenberg (DE); METTKEN, Werner, D-59969 Hallenberg (DE)
(86) Internationale Anmeldenummer: PCT/EP1998/007984
(87) Internationale Veröffentlichungsnummer: WO 1999/035781

(56) Entgegenhaltungen:
- WO-A-95/14283
- US-A- 5 513 245
- US-A- 5 606 617

## Beschreibung

Die Erfindung bezieht sich auf ein asymmetrisches Kryptoverfahren der im Oberbegriff des Patentanspruchs 1 näher bezeichneten Art. Derartige Verfahren sind vielfach bekannt und z. B. in Menezes: Handbook of applied cryptography 1997 beschrieben.

Ein Kernproblem aller bekannten offenen Kryptoverfahren ist die zuverlässige Zuordnung der eingesetzten Signatur- und Verschlüsselungsschlüssel zum berechtigten.Inhaber und die Bestätigung der Zuordnung durch eine unabhängige dritte Instanz. Fachsprachlich ist dies die Frage einer zuverlässigen Personalisierung der Schlüssel mit anschließender Zertifizierung.

Vertrauenswürdige Verfahren, wie z. B. von Kowalski, in Der Fernmeldeingenieur 4/5 1995,: "Security Management System" beschrieben, lösen dies heute, indem solche Schlüssel an zentraler, besonders abgesicherter Stelle (meist sogenannte Trust Center) generiert, personalisiert und zertifiziert werden.

Es ist jedoch nicht auszuschließen, daß die Anwender ihre Kryptoschlüssel, insbesondere jene zur Verschlüsselung, zukünftig zunehmend selbst generieren wollen. Dieser Wunsch darf dabei nicht auf Kosten der Sicherheit und Zuverlässigkeit des jeweiligen Verfahrens realisiert werden, wie dies heute bei nur lose organisierten asymmetrischen Kryptoverfahren des Internet der Fall ist.

Aus WO 95/14283 ist ein Verfahren für eine gesicherte Verteilung von Zertifikaten und Verschlüsselungsmaterial zwischen einer Zertifizierungsstelle und zumindest einer Einheit im Einzugsbereich der Zertifizierungsstelle bekannt. Bei diesem Verfahren erhält die Einheit von der Zertifizierungsstelle auf sicherem Weg, beispielsweise auf dem Postweg, Verschlüsselungsmaterial, beispielsweise ein Passwort. Dieses Passwort wird dann dazu verwendet, einen sicheren Kommunikationsweg zwischen der Zertifizierungsstelle und der Einheit zu etablieren, um auf sicherem Weg ein Zertifikat für einen öffentlichen Schlüssel eines von der Einheit generierten Schlüsselpaares von der Zertifizierungsstelle zu erhalten. Nachteilig an dem Verfahren ist beispielsweise, dass die Identifikation durch Übertragung der Adresse der Einheit zur Zertifizierungsstelle erfolgt, wodurch die organisatorische Sicherheit reduziert ist.

Als Aufgabe der Erfindung bedarf es somit eines Verfahrens, welches die Schlüsselgenerierung in den Verantwortungsbereich der Anwender verlagert, ohne auf die organisatorische Sicherheit einer unabhängigen Instanz zu verzichten.

Diese Aufgabe wird mit dem im Kennzeichen des Patentanspruchs 1 aufgeführten Verfahren gelöst.

Vorteilhafte Weiterbildungsmöglichkeiten sind aus den Kennzeichen der Unteransprüch 2 und 3 ersichtlich.

Die Erfindung wird anhand des nachfolgenden Ausführungsbeispiels näher erläutert:

Der Anwender erhält von zentraler Stelle, nachfolgend allgemein als Trust Center bezeichnet, ein bereits generiertes personalisiertes und zertifiziertes Signaturschlüsselpaar, z. B. ein privater Signaturschlüssel PS und ein öffentlicher Signaturschlüssel ÖS sowie die Komponenten zur Erzeugung eines oder mehrerer Verschlüsselungsschlüsselpaare Generate Encryption Keys GEK.

Der Anwender erzeugt nun irgendwann selbst ein Verschlüsselungsschlüsselpaar, z. B. einen privaten Verschlüsselungsschlüssel PVS, signiert den öffentlichen Teil dieses Paares, den öffentlichen Verschlüsselungsschlüssel ÖVS mit dem zuvor überlassenen geheimen Signaturschlüssel PS, und übermittelt das Ergebnis an das Trust Center. Dort ist das Ergebnis über eine Prüfung mit Hilfe des zertifizierten öffentlichen Teiles des Signaturschlüsselpaares des Anwenders ÖS zweifelsfrei und zuverlässig als dem Anwender gehörend zuzuordnen.

Das Trust Center erzeugt daraufhin ein neues Zertifikat, in dem entweder sowohl der öffentliche Teil des Signaturschlüsselpaares ÖS als auch der des Verschlüsselungsschlüsselpaares ÖVS, oder nur der des Verschschlüsselungsschlüsselpaares des Anwenders ÖVS enthalten sind.

Dieses Zertifikat wird im nächsten Schritt mit dem öffentlichen Teil des Verschlüsselungsschlüsselpaares des Anwenders ÖVS verschlüsselt und dann übermittelt.

Damit ist sichergestellt, daß nur der berechtigte Anwender das Zertifikat entschlüsseln und, bei hardwarebasierten Systemen, in seine korrespondierende Hardware herunterladen kann. Der Anwender mußte zu keinem Zeitpunkt sein Geheimnis, nämlich den geheimen Teil des Verschlüsselungsschlüsselpaares PVS preisgeben.

Will der Anwender zusätzlich auch noch das Signaturschlüsselpaar in seinem Verantwortungsbereich erzeugen, also auch den geheimen Teil eines Signaturschlüsselpaares, einen zweiten privaten Signaturschlüssel PS2, vor dem Zugriff des Trust Center schützen, so wird dieses Verfahren auch dafür analog eingesetzt. Dem Anwender werden nur noch zusätzlich die Komponenten Generate Digital Signature Keys GDSK.zur Erzeugung eines oder mehrerer Signaturschlüsselpaare überlassen.

Einmal erzeugt, signiert der Anwender, unter Zuhilfenahme des vom Trust Center überlassenen geheimen Signaturschlüssels PS, neben oder zugleich mit dem öffentlichen Teil des selbst generierten Verschlüsselungspaares ÖVS, auch noch den öffentlichen Teil des selbst generierten Signaturschlüsselpaares ÖS2 und übermittelt das Ergebnis an das Trust Center, wo danach ebenso wie oben beschrieben, weiter verfahren wird.

Soweit der Anwender AW1 überhaupt keine Kommunikation mehr mit einem Trust Center wünscht, kann er auch dies mit dem beschriebenen Verfahren ohne Verlust an Zuverlässigkeit tun, indem er bei jeder bilateralen Kommunikation mit einem anderen Anwender AW2 dem Kommunikationspartner zunächst den öffentlichen Teil seines selbst generierten Schlüsselpaares ÖVS mit dem geheimen Teil des zuvor vom Trust Center überlassenen, personalisierten und zertifizierten Schlüsselpaares PS signiert und zustellt.

Der empfangende Kommunikationspartner AW2 kann die korrekte Zuordnung dieser Information hinsichtlich des öffentlichen Teils ÖVS des vom sendenden Anwenders AW1 selbst generierten Schlüsselpaares durch eine Verifikation der Signatur zuverlässig prüfen und gegebenenfalls die Echtheit und Gültigkeit des dieser Signatur zugrundeliegenden Zertifikates im Trust Center überprüfen.

## Patentansprüche

1. Verfahren zur Generierung asymmetrischer Kryptoschlüssel beim Anwender, bei dem Schlüssel an einer zentralen, besonders abgesicherten Stelle, (Trust Center), bzw. im Zusammenwirken mit gesicherter Übermittlung zwischen dem Anwender und diesem Trust Center, beim Anwender generiert, personalisiert und zertifiziert werden, **dadurch gekennzeichnet, daß**
a. dem Anwender zuerst vom Trust Center ein bereits generiertes, personalisiertes und zertifiziertes Signaturschlüsselpaar (PS; ÖS) und dazu Komponenten zur Erzeugung eines bzw. mehrerer Verschlüsselungsschlüsselpaare (GEK) zugestellt wird,
b. vom Anwender danach ein weiteres eigenes Verschlüsselungsschlüsselpaar mit einem öffentlichen (ÖVS) und einem geheimen Teil (PVS) erzeugt, und der öffentliche Teil (ÖVS)mit dem zugestellten geheimen Teil (PS) des Signaturschlüssels signiert und das Ergebnis zum Trust Center übermittelt wird,
c. vom Trust Center danach die zweifelsfreie Zuordnung des übermittelten Ergebnisses zum Anwender mittels des zertifizierten öffentlichen Teils (ÖS) des Signaturschlüsselpaares geprüft wird,
d. vom Trust Center, nach erfolgreicher Zuordnungsprüfung, unter Verwendung von wenigstens einem öffentlichen Teil des Signaturschlüsselpaares (ÖS) bzw. des Verschlüsselungsschlüsselpaares (ÖVS) des Anwenders ein neues Zertifikat erzeugt wird, und zuletzt
e. vom Trust Center dieses Zertifikat, mit dem öffentlichen Teil des Verschlüsselungsschlüsselpaares (ÖVS) des Anwenders verschlüsselt, zum Anwender übermittelt wird.

2. Verfahren zur Generierung asymmetrischer Kryptoschlüssel beim Anwender nach Anspruch 1, **dadurch gekennzeichnet, daß** dem Anwender beim Verfahrensschritt a. zusätzlich Komponenten (GDSK) zur Erzeugung eines bzw. mehrerer Signaturschlüsselpaare zugestellt werden, welche beim Verfahrensschritt b. vom Anwender mit erzeugt werden, und daß vom Anwender auch der öffentliche Teil (ÖS2) dieses selbst generierten Signaturschlüsselpaares zugleich bzw. daneben mittels des geheimen Teils des vom Trust Center erhaltenen Signaturschlüsselpaares (PS) signiert wird.

3. Verfahren zur Generierung asymmetrischer Kryptoschlüssel beim Anwender nach Anspruch 1 und 2, **dadurch gekennzeichnet, daß** ein Anwender (AW1), der überhaupt keine Kommunikation mit einem Trust Center wünscht, bei jeder bilateralen Kommunikation mit einem anderen Anwender (AW2), diesem zunächst den öffentlichen Teil seines selbst generierten Schlüsselpaares (ÖVS bzw. ÖS2) mit dem geheimen Teil des zuvor vom Trust Center überlassenen, personalisierten und zertifizierten Schlüsselpaares (PS) signiert und zustellt, wonach vom empfangenden Anwender (AW2) die korrekte Zuordnung dieser Information hinsichtlich des öffentlichen Teils (ÖVS bzw. ÖS2) des vom sendenden Anwenders (AW1) selbst generierten Schlüsselpaares durch eine Verifikation der Signatur geprüft wird und die Echtheit und Gültigkeit des dieser Signatur zugrundeliegenden Zertifikates im Trust Center überprüft werden kann.

## Claims

1. Method for generating asymmetric cryptographic keys by the user, wherein keys are generated, personalized and certified by the user at a central, specially secured location (trust center) or in conjunction with secured transmission between the user and said trust center, **characterized in that**
a) the user is first provided by the trust center with an already generated, personalized, and certified signature key pair (PS; ÖS) and additionally with components for generating one or more encryption key pairs (GEK),
b) the user then generates another, separate encryption key pair with a public (ÖVS) and a private (PVS) part, and signs the public part (ÖVS) using the supplied private part (PS) of the signature key, and transmits the result to the trust center,
c) the trust center then verifies the unequivocal association of the transmitted result with the user by means of the certified public part (ÖS) of the signature key pair,
d) after successful verification of the association, the trust center generates a new certificate using at least one public part of the signature key pair (ÖS) or of the user's encryption key pair (ÖVS), and lastly
e) the trust center transmits to the user this certificate encrypted with the public part of the user's encryption key pair (ÖVS).

2. Method for generating asymmetric cryptographic keys by the user according to claim 1, **characterized in that** in step (a), the user is provided with additional components (GDSK) for generating one or more signature key pairs, which pairs are generated by the user as part of step (b), and **in that**, at the same time or in addition, the user also signs the public part (ÖS2) of this self-generated signature key pair by means of the private part of the signature key pair (PS) received from the trust center.

3. Method for generating asymmetric cryptographic keys by the user according to claim 1 or claim 2, **characterized in that** a user (AW1) who wishes to have absolutely no communication with a trust center, during every bilateral communication with another user (AW2), first signs the public part of his self-generated key pair (ÖVS or ÖS2) using the private part of the personalized, certified part of the key pair (PS) previously provided by the trust center and provides it to the other user, whereupon the receiving user (AW2) verifies, by verifying the signature, the correct association of this information with respect to the public part (ÖVS or ÖS2) of the key pair generated by the sending user (AW1), and the genuineness and validity of the certificate underlying this signature can be verified in the trust center.

## Revendications

1. Procédé de génération de clés cryptographiques asymétriques auprès de l'utilisateur, dans lequel des clés sont générées auprès de l'utilisateur, personnalisées et certifiées en un service central spécialement sécurisé (trust center) ou en interaction avec transmission sécurisée entre l'utilisateur et ce *trust center,*
**caractérisé en ce que**
a. le trust center remet tout d'abord à l'utilisateur une paire de clés de signature (PS ; ÖS) déjà générée, personnalisée et certifiée ainsi que des composants pour la génération d'une ou plusieurs paires de clés de codage (GEK),
b. l'utilisateur génère ensuite une autre paire propre de clés de codage comprenant une partie publique (ÖVS) et une partie secrète (PVS), signe la partie publique (ÖVS) avec la partie secrète transmise (PS) de la clé de signature et transmet le résultat au *trust center,*
c. le *trust center* vérifie ensuite à l'aide de la partie publique certifiée (ÖS) de la paire de clés de signature que l'assignation du résultat transmis à l'utilisateur ne porte pas à équivoque,
d. après vérification de l'assignation, le *trust center* génère un nouveau certificat en utilisant au moins une partie publique de la paire de clés de signature (ÖS) ou de la paire de clés de codage (ÖVS) de l'utilisateur,
e. le *trust center* transmet enfin à l'utilisateur ce certificat, codé à l'aide de la partie publique de la paire de clés de codage (ÖVS) de l'utilisateur.

2. Procédé de génération de clés cryptographiques asymétriques auprès de l'utilisateur selon la revendication 1, **caractérisé en ce que**, dans la phase a., l'utilisateur se voit remettre en outre des composants (GDSK) servant à générer une ou plusieurs paires de clés de signature, lesquelles sont en plus générées par l'utilisateur dans la phase b., et **en ce que** l'utilisateur signe aussi en même temps ou à côté la partie publique (ÖS2) de cette paire de clés de signature qu'il a lui-même générée, en utilisant la partie secrète de la paire de clés de signature (PS) qu'il a reçue du *trust center.*

3. Procédé de génération de clés cryptographiques asymétriques auprès de l'utilisateur selon les revendications 1 et 2, **caractérisé en ce qu'**un utilisateur (AW1) qui ne désire pas communiquer avec un *trust center* se charge pour chaque communication bilatérale avec un autre utilisateur (AW2) de signer et de remettre d'abord à celui-ci la partie publique de la paire de clés qu'il a lui-même générée (ÖVS ou ÖS2), en utilisant la partie secrète de la paire de clés (PS) personnalisée et certifiée préalablement remise par le *trust* center, l'utilisateur destinataire (AW2) contrôlant ensuite par vérification de la signature l'assignation correcte de cette information en ce qui concerne la partie publique (ÖVS ou ÖS2) de la paire de clés générée par l'utilisateur expéditeur (AW1), et le *trust center* pouvant vérifier l'authenticité et la validité du certificat sur lequel repose cette signature.
